# EUROPÄISCHE PATENTANMELDUNG

(11) **EP 0 624 609 A2**
(43) Veröffentlichungstag der Anmeldung: **17.11.1994**
(21) Anmeldenummer: 94106803.3
(22) Anmeldetag: 02.05.1994
(51) Int. Cl.: C08F 283/01, C08L 67/07, C09D 4/06

(54) **Emissionsarme ungesättigte Polyesterharze**

(30) Priorität: 12.05.1993 DE 4315830
(71) Anmelder: BASF Aktiengesellschaft, D-67063 Ludwigshafen (DE)
(72) Erfinder: Gerth, Dale, Dr., D-67346 Speyer (DE); Altstaedt, Volker, Dr., D-64579 Gernsheim (DE); Schwiegk, Stefan, Dr., D-67433 Neustadt (DE)

(57) **Zusammenfassung**

Die Erfindung betrifft ein emissionsarmes, styrolfreies ungesättigtes Polyesterharz aus einem Polyester mit Acrylat- oder Methacrylat-Endgruppen und einem hochsiedenden Acrylat- oder Methacrylat-Comonomer. Das Harz eignet sich zur Herstellung von flexiblen Beschichtungen und Abdichtungen.

## Beschreibung

Die Erfindung betrifft emissionsarme ungesättigte Polyesterharze, die frei von Styrol sind, und zu elastischen Formteilen, insbesondere Beschichtungen und Dichtungsmassen ausgehärtet werden können.

Handelsübliche UP-Harze enthalten in der Regel als copolymerisierbares Monomeres Styrol in Mengen von mehr als 30 bis 35 Gew.-%. In der Bundesrepublik Deutschland wurde die maximale Arbeitsplatzkonzentration an Styrol von 100 ppm auf 20 ppm gesenkt. Bei vielen handwerklichen Verarbeitungsverfahren kann dieser MAK-Wert mit den meisten UP-Harzen nur durch kostenintensive lüftungstechnische Maßnahmen eingehalten werden.

Man hat daher schon verschiedentlich vorgeschlagen, Acrylate oder Methacrylate statt Styrol als Comonomere einzusetzen.

Aus EP-A 260 686 ist bekannt, daß sich ungesättigte Polyester mit Maleinsäure-Endgruppen zur Herstellung von Formkörpern mit guten mechanischen Eigenschaften eignen. In Beispiel 1 wird eine elastische Beschichtungsmasse auf Basis eines ungesättigten Polyesters mit 95 % endständigen Maleinsäuregruppen beschrieben. Der Polyester wird hergestellt durch Polykondensation von Adipinsäure und Neopentylglykol und anschließender Umsetzung mit Maleinsäureanhydrid. Als Comonomer dient Styrol. Versucht man, bei diesem Polyesterharz das Styrol durch ein Acrylat- oder Methacrylat-Comonomer zu ersetzen, so stellt man fest, daß das Harz mit den üblichen Kalthärtungsinitiatoren nicht mehr ausgehärtet werden kann.

Der Erfindung lag also die Aufgabe zugrunde, emissionsarme, styrolfreie Beschichtungs- und Dichtungsmassen bereitzustellen, die durch Kalthärtung zu elastischen Formkörpern gehärtet werden können.

Diese Aufgabe wird gelöst durch ein ungesättigtes Polyesterharz, enthaltend
A) 90 bis 40 Gew.-% eines Polyesters mit Acrylat- oder Methacrylat-Endgruppen,
B) 10 bis 60 Gew.-% eines Acrylat- oder Methacrylat-Comonomeren mit einem Siedpunkt von mindestens 150°C (bei Normaldruck), und
C) 0 bis 50 Gew.-% anderer hochsiedender Monomerer.

Bei der Herstellung der Komponente A geht man von einem üblichen gesättigten oder ungesättigten Polyester aus. Wenn man flexible Beschichtungen und Abdichtungen erhalten will, setzt man bevorzugt Polyester aus Adipinsäure und Neopentylglykol ein. Die Adipinsäure kann dabei teilweise oder ganz durch andere gesättigte oder ungesättigte Dicarbonsäuren ersetzt sein, wie z.B. Phthalsäure, Terephthalsäure oder Maleinsäure; das Neopentylglykol kann ganz oder teilweise durch andere längerkettige Diole ersetzt sein, wie z.B. 1,4-Butandiol, Dipropylenglykol, Diethylenglykol, Propylenglykol oder Ethylenglykol.

Es werden bevorzugt niedermolekulare Polyester eingesetzt mit einem Molekulargewicht zwischen 400 und 5.000, insbesondere zwischen 500 und 1.500. Dieser Polyester wird dann mit Methacrylsäure oder Glycidylmethacrylat umgesetzt. Im ersten Fall geht man aus von einem Polyester, der mit Diol-Überschuß hergestellt wurde und eine Hydroxyzahl von vorzugsweise 20 bis 50, insbesondere von 25 bis 40 aufweist, im anderen Fall von einem Polyester, der mit Dicarbonsäure-Überschuß hergestellt wurde und eine Säurezahl von vorzugsweise 20 bis 50, insbesondere von 25 bis 40 aufweist.

In beiden Fällen wird die Reaktion bei erhöhten Temperaturen, vorzugsweise bei 80 bis 160°C, in Gegenwart von basischen bzw. sauren Veresterungskatalysatoren durchgeführt, z.B. organischen Aminen bzw. Sulfonsäuren. Im Fall der Umsetzung mit Methacrylsäure sollte ein Schleppmittel zur azeotropen Entfernung des gebildeten Wassers zugesetzt werden.

Das erfindungsgemäße Polyesterharz enthält 10 bis 60, vorzugsweise 15 bis 40 Gew.-%, bezogen auf A+B, eines Acrylat- oder Methacrylat-Comonomeren B mit einem Siedepunkt von mindestens 150°C, vorzugsweise von mindestens 180°C (bei Normaldruck).

Bevorzugte Monomere sind Methacrylsäureester, wie z.B. 2-Ethylhexylmethacrylat, Phenylethylmethacrylat, Tetrahydrofurfurylmethacrylat, Ethyltriglykolmethacrylat, N,N-Dimethylaminoethylmethacrylat, N,N-Dimethylaminomethylmethacrylat, 1,4-Butandioldimethacrylat, 1,2-Ethandioldimethacrylat, Diethylenglykoldimethacrylat, Methoxypolyethylenglykolmonomethacrylat, Trimethylolpropantrimethacrylat; vorzugweise 2-Hydroxyethylmethacrylat, Hydroxypropylmethacrylat und Dicyclopentenyloxyethylmethacrylat. Auch Mischungen der genannten Monomeren sind geeignet.

Ferner kann das Polyesterharz 0 bis 50 Gew.-%, anderer hochsiedender copolymerisierbarer Monomerer mit einem Siedepunkt von vorzugsweise mindestens 150°C enthalten. Zum Beispiel kann durch Zusatz von 5 bis 40 Gew.-% Allylmonomerer, wie Trimethylolpropandiallylether, Glyceroldiallyladipat oder Glyceroldiallylether die Klebrigkeit der ausgehärteten Beschichtungen reduziert werden.

Den erfindungsgemäßen Polyesterharzen können die üblichen Zusatzstoffe und Hilfsmittel zugesetzt werden, z.B. phenolische Inhibitoren in Mengen von 50 bis 500 ppm. Weitere übliche Zusatzstoffe und Hilfsmittel sind z.B. Verstärkungs- und Füllstoffe, wie Glasfasern, Kohlenstoffasern und organische Fasern als Roving, Matten oder Gewebe, Glaskugeln, Glasmikrohohlkugeln; Aluminiumhydroxid, Siliciumdioxid, Kreide, Talkum, Sand und Holzmehl; Pigmente, wie Titandioxid, Verdickungsmittel, wie Magnesiumoxid oder Polyisocyanate; schrumpfmindernde Zusätze, wie Polystyrol, Polyvinylacetat oder Polymethylmethacrylat; Elastifiziermittel, wie Polyurethane oder Dienkautschuke; Flammschutzadditive, wie Decabromdiphenylether und Chlorparaffin; ferner Thixotropiermittel, Gleitmittel und Lösungsmittel.

Bei der bevorzugten Anwendung als Beschichtungsmassen enthalten diese
10 bis 90 Gew.-% des erfindungsgemäßen Polyesterharzes,
0 bis 60 Gew.-% Füllstoff
0 bis 2 Gew.-% eines Paraffinwachses und
0 bis 5 Gew.-% feinteilige Kieselsäure.

Bevorzugte Füllstoffe sind Aluminiumoxidhydrat, Kreide, Feldspat, Kaolin, Talkum und Quarzmehl.

Paraffinwachse sollen eine oberflächliche Oxidation der Harze verhindern, was zu einer unvollständigen Härtung der oberen Harzschicht und damit zu einer klebrigen Oberfläche der Beschichtungen führen würde. Als Paraffine sind die üblichen höheren Kohlenwasserstoffe geeignet, und zwar sowohl feste, wachsartige Substanzen als auch flüssige Paraffinöle. Bevorzugt sind Mischungen aus Paraffinen mit einem Schmelzpunkt zwischen 25°C und 50°C und solchen mit einem Schmelzpunkt zwischen 51°C und 100°C, wie in EP-A 941 beschrieben. Auch Mischungen mit Paraffinölen sind geeignet, wodurch die Verträglichkeit mit dem Polyesterharz erhöht wird. Besonders bevorzugt sind Gemische aller drei genannten Paraffine im Verhältnis von etwa 1:1:1.

Die feinteilige Kieselsäure wirkt als Thixotropiermittel, das vor allem bei nicht waagrechten Beschichtungssubstraten ein Ablaufen des Beschichtungsharzes verhindern soll.

Den Harzen können schließlich die üblichen Peroxidinitiatoren zugesetzt werden. Bei der bevorzugten Kalthärtung werden bei niedrigen Temperaturen zerfallende Peroxide, z.B. Methylethylketonperoxid, Benzoylperoxid und Acetylacetondihydroperoxid sowie die üblichen Beschleuniger, wie Amine oder Kobalt-Verbindungen verwendet, wobei die Peroxide dem Harz zweckmäßigerweise erst kurz vor der Härtung zugesetzt werden sollten. Es ist auch möglich, übliche Photoinitiatoren, wie z.B. Acylphosphinoxide, Bisacylphosphinoxide, Benzilketale oder Benzoinäther, zuzusetzen und die Härtung durch Bestrahlung vorzunehmen.

Die erfindungsgemäßen Harze werden bevorzugt als emissionsarme, elastische Beschichtungs- und Dichtungsmassen zum Beschichten und Abdichten von Gebäudeteilen, wie Dächern, Terrassen, Balkonen, Fundamenten und Dachrinnen gegen den Einfluß von Wasser, Feuchtigkeit und aggresive Medien verwendet. Die Emission dieser Massen bei Raumtemperatur ist vorzugsweise kleiner als 1 g pro m². Die nach der Härtung der Massen erhaltenen Beschichtungen und Abdichtungen zeichnen sich durch klebfreie Oberfläche und hohe Flexibilität aus; ihre Zugdehnung (bei Raumtemperatur), gemessen nach DIN 53 504, ist vorzugsweise größer als 30 %, insbesondere größer als 80 %; Zur Ermittlung der Emission der reaktiven Harzmasse werden in einer offenen Gießform Proben von 50 g Harz, denen Katalysator und Beschleuniger beigemischt sind, bei 20°C auf einen runden Blechdeckel mit 196 cm² Oberfläche und einer 5 mm hohen äußeren Umrandung gegossen, gewogen und dann 2 Stunden lang an der offenen Luft stehen gelassen. Nach 2 Stunden werden die Proben erneut gewogen und die Gewichtsdifferenz als Maß für die Emmision ermittelt.

Die in den Beispielen genannten Teile und Prozente beziehen sich auf das Gewicht.

### Beispiel

a) 2780 g (19,2 Mol) Adipinsäure und 2020 g (19,4 Mol) Neopentylglykol wurden in ein Reaktionsgefäß eingewogen, das mit einem Thermometer, einem ständig arbeitenden Rührwerk und einer Vorrichtung zum Einleiten eines Stickstoffstromes ausgestattet war.
   Die Mischung wurde langsam über 6 Stunden auf 205°C erhitzt und so lang dabei gehalten, bis die Säurezahl einer entnommenen Probe 35 mg KOH/g betrug.
b) 2180 g des nach a) hergestellten Harzes, 2,2 g N,N-Dimethylbenzylamin und 712 mg (300 ppm) Ditertbutyl-4-methylphenol wurden in ein Reaktionsgefäß eingewogen, das mit einem Thermometer und einem ständig arbeitenden Rührwerk ausgestattet war. Die Mischung wurde auf 120°C erhitzt und 194 g 2,3-(Epoxypropyl)methacrylat wurden über 20 min zugetropft. Die Mischung wurde so lang dabei gehalten, bis die Säurezahl einer entnommenen Probe weniger als 5 mg KOH/G betrug.
c) 58,8 Teile des nach b) hergestellten Harzes, 12,6 Teile Hydroxyethylmethacrylat, 12,6 Teile Dicyclopentenyloxyethylmethacrylat, 15 Teile Aluminiumoxidhydrat (Martinal ON 310), 1 Teil Kreide (Cabosil M-5), 0,1 Teile einer 50 % Lösung von Hydroxyethylanilin in Methanol wurden zusammen gerührt und entgast. 0,75 Teile Benzoylperoxid-Paste (50 %ig) wurden eingerührt und das Harz wurde entgast. Seine Emission lag unter 1 g pro m². Es wurden Platten hergestellt, wobei das Gemisch in eine 10 cm x 20 cm x 3 mm Form gegossen wurde und über Nacht bei Raumtemperatur aushärtete. Der erhaltene Formkörper wies eine Zug-Bruchfestigkeit (nach DIN 53 504) von 2,1 [MPa] und eine Zug-Bruchdehnung (nach DIN 53 504) von 96 % auf.

## Patentansprüche

1. Emissionsarmes, ungesättigtes Polyesterharz, enthaltend
A) 90 bis 40 Gew.-% eines Polyesters mit Acrylat- oder Methacrylat-Endgruppen,
B) 10 bis 60 Gew.-% eines Acrylat- oder Methacrylat-Comonomeren mit einem Siedepunkt von mindestens 150°C (bei Normaldruck), und
C) 0 bis 50 Gew.-% anderer hochsiedender Comonomerer.

2. Polyesterharz nach Anspruch 1, dadurch gekennzeichnet, daß der Polyester A ein Polykondensationsprodukt von Adipinsäure und Neopentylglykol ist, das mit Methacrylsäure oder Glycidylmethacrylat umgesetzt wurde.

3. Polyesterharz nach Anspruch 1, dadurch gekennzeichnet, daß das Comonomere B Hydroxyethylmethacrylat, Hydroxypropylmethacrylat oder Dicyclopentenyloxyethylmethacrylat ist.

4. Beschichtungs- und Dichtungsmasse, enthaltend
20-90 Gew.-% des Polyesterharzes nach Anspruch 1,
0-60 Gew.-% Füllstoff,
0- 2 Gew.-% eines Paraffinwachses,
0- 5 Gew.-% feinteilige Kieselsäure.

5. Verfahren zur Herstellung von Beschichtungen und Dichtungen durch Kalthärtung der Masse nach Anspruch 4, dadurch gekennzeichnet, daß man der Masse übliche, bei niedrigen Temperaturen zerfallende Peroxide, sowie übliche Beschleuniger, vorzugsweise Amine oder Kobalt-Verbindungen zusetzt, und die Härtung bei Temperaturen unterhalb von 50°C durchführt.

6. Verfahren zur Herstellung von Beschichtungen und Dichtungen durch Lichthärtung der Massen nach Anspruch 4, dadurch gekennzeichnet, daß man die einen Photoinitiator enthaltende Masse durch Bestrahlung aushärtet.
